# EUROPÄISCHE PATENTSCHRIFT

(11) **EP 3 386 825 B1**
(45) Veröffentlichungstag und Bekanntmachung des Hinweises auf die Patenterteilung: **18.09.2019**
(21) Anmeldenummer: 16787426.2
(22) Anmeldetag: 25.10.2016
(51) Int. Cl.: B60W 30/095, B60W 10/184, B60W 10/20, B60W 40/04

(54) **VERFAHREN ZUM ERKENNEN EINER MÖGLICHEN KOLLISION ZWISCHEN EINEM KRAFTFAHRZEUG UND EINEM OBJEKT UNTER BERÜCKSICHTIGUNG EINER RÄUMLICHEN UNSICHERHEIT, STEUEREINRICHTUNG, FAHRERASSISTENZSYSTEM SOWIE KRAFTFAHRZEUG**
METHOD FOR IDENTIFYING A POSSIBLE COLLISION BETWEEN A MOTOR VEHICLE AND AN OBJECT BY TAKING INTO ACCOUNT A SPATIAL UNCERTAINTY, CONTROL DEVICE, DRIVER ASSISTANCE SYSTEM AND MOTOR VEHICLE
PROCÉDÉ DE DÉTECTION D'UNE COLLISION POSSIBLE ENTRE UN VÉHICULE AUTOMOBILE ET UN OBJET EN PRENANT EN COMPTE UNE INCERTITUDE SPATIALE, DISPOSITIF DE COMMANDE, SYSTÈME D'AIDE À LA CONDUITE ET VÉHICULE AUTOMOBILE

(30) Priorität: 08.12.2015 DE 102015121353
(43) Veröffentlichungstag der Anmeldung: 17.10.2018
(73) Patentinhaber: Valeo Schalter und Sensoren GmbH, 74321 Bietigheim-Bissingen (DE)
(72) Erfinder: GUECHAI, Wael, 74321 Bietigheim-Bissingen (DE); HEIMBERGER, Markus, 74321 Bietigheim-Bissingen (DE); BARIANT, Jean-Francois, 74321 Bietigheim-Bissingen (DE)
(74) Vertreter: Withopf, Kristina
(86) Internationale Anmeldenummer: PCT/EP2016/075641
(87) Internationale Veröffentlichungsnummer: WO 2017/097486

(56) Entgegenhaltungen:
- DE-A1-102005 002 760
- DE-A1-102005 026 386
- DE-A1-102009 045 286

## Beschreibung

Die vorliegende Erfindung betrifft ein Verfahren zum Erkennen einer möglichen Kollision zwischen einem Kraftfahrzeug und einem Objekt, bei welchem ein Fahrschlauch bestimmt wird, wobei der Fahrschlauch einen Bereich beschreibt, in dem das Kraftfahrzeug bei einer zukünftigen Bewegung bewegt wird, Sensordaten von einem Sensor empfangen werden, welche das Objekt beschreiben, anhand der empfangenen Sensordaten ein Objektbereich bestimmt wird, welche eine Position des Objekts einschließlich einer räumlichen Unsicherheit beschreibt, und falls der Objektbereich teilweise innerhalb des Fahrschlauchs angeordnet ist, die mögliche Kollision anhand einer relativen Lage des Fahrschlauchs zu dem Objektbereich erkannt wird. Darüber hinaus betrifft die vorliegende Erfindung eine Steuereinrichtung für ein Fahrerassistenzsystem eines Kraftfahrzeugs. Darüber hinaus betrifft die vorliegende Erfindung ein Fahrerassistenzsystem sowie in Kraftfahrzeug.

Das Interesse richtet sich vorliegend insbesondere auf Fahrerassistenzsysteme für Kraftfahrzeuge, welche dazu dienen, einen Fahrer beim Führen des Kraftfahrzeugs zu unterstützten. Hierzu sind aus dem Stand der Technik unterschiedliche Fahrerassistenzsysteme bekannt, welche entsprechende Sensoren aufweisen, mit denen Objekte in einem Umgebungsbereich des Kraftfahrzeugs erfasst werden können. Derartige Sensoren können beispielsweise Ultraschallsensoren, Kameras, Laserscanner, Lidar-Sensoren, Radarsensoren oder eine Kombination dieser Sensoren sein. Dabei können die Sensordaten, die von den Sensoren bereitgestellt werden, mittels einer Steuereinrichtung des Fahrerassistenzsystems ausgewertet werden. Falls eine Kollision zwischen dem Kraftfahrzeug und dem Objekt droht, kann beispielsweise eine Warnung an den Fahrer des Kraftfahrzeugs ausgegeben werden. Diese Warnung kann beispielsweise optisch, akustisch und/oder haptisch ausgegeben werden. Ferner sind Fahrerassistenzsysteme bekannt, welche in die Lenkung und/oder die Bremsanlage des Kraftfahrzeugs eingreifen, um die Kollision mit dem Objekt zu verhindern.

Die Objekte, die anhand der Sensordaten erkannt wurden, werden üblicherweise in eine digitale Umgebungskarte eingetragen, welche den Umgebungsbereich des Kraftfahrzeugs beschreibt. Dabei können die räumlichen Abmessungen und die Position der Objekte in die Umgebungskarte eingetragen werden. Hierzu wird üblicherweise in der digitalen Umgebungskarte für jedes der Objekte ein Objektbereich definiert, welcher die Position des Objekts einschließlich einer räumlichen Unsicherheit beschreibt. Weiterhin ist es bekannt, einen Fahrschlauch zu bestimmen, der den Bereich beschreibt, in dem das Kraftfahrzeug zukünftig bewegt werden soll. Um eine Kollision zwischen dem Kraftfahrzeug und einem der Objekte vorherzusagen, kann überprüft werden, ob der Objektbereich eine Überschneidung mit dem Fahrschlauch aufweist.

Hierzu beschreibt die EP 2 483 708 B1 ein Verfahren zur Abbildung des Umfelds eines Fahrzeugs. Hierbei werden Objekte im Umfeld des Fahrzeugs mit Sensoren detektiert und zu den Objekten, zu denen eine Kollisionswahrscheinlichkeit ausgehen kann, werden genau zwei Koordinatenpunkte sowie eine dem jeweiligen Koordinatenpunkt zugeordnete Positionsunschärfe beschrieben. Ferner wird ein von dem Fahrzeug zu durchfahrender Fahrschlauch bestimmt. Darüber hinaus wird ein Überdeckungsgrad des Objekts mit dem Fahrschlauch und damit eine Kollisionswahrscheinlichkeit und damit unter Berücksichtigung der Positionsunschärfe bestimmt.

Weiterhin offenbaren auch DE 10 2009 045286 A1 und DE 10 2005 026386 A1 verschiedene Verfahren zum Erkennen einer möglichen Kollision zwischen einem Kraftfahrzeug und einem Objekt und zur Unfallvermeidung.

Es ist Aufgabe der vorliegenden Erfindung, eine Lösung aufzuzeigen, wie eine mögliche Kollision zwischen einem Kraftfahrzeug und einem Objekt zuverlässiger erkannt werden kann.

Diese Aufgabe wird erfindungsgemäß durch ein Verfahren, durch eine Steuereinrichtung, durch ein Fahrerassistenzsystem sowie durch ein Kraftfahrzeug mit den Merkmalen gemäß den jeweiligen unabhängigen Ansprüchen gelöst. Vorteilhafte Weiteerbildungen der Erfindung sind Gegenstand der abhängigen Ansprüche, der Beschreibung und der Figuren.

Ein erfindungsgemäßes Verfahren dient zum Erkennen einer möglichen Kollision zwischen einem Kraftfahrzeug und einem Objekt. Hierbei wird ein Fahrschlauch bestimmt, wobei der Fahrschlauch einen Bereich beschreibt, in dem das Fahrzeug bei einer zukünftigen Bewegung bewegt wird. Darüber hinaus werden Sensordaten von einem Sensor empfangen, welche das Objekt beschreiben. Anhand der empfangenen Sensordaten wird ein Objektbereich bestimmt, welcher eine Position des Objekts einschließlich einer räumlichen Unsicherheit beschreibt. Falls der Objektbereich teilweise innerhalb des Fahrschlauchs angeordnet ist, wird die mögliche Kollision anhand einer relativen Lage des Fahrschlauchs zu dem Objekt erkannt. Zudem wird eine Entfernung zwischen dem Fahrschlauch und einem Punkt des Objektbereichs, welcher außerhalb des Fahrschlauchs angeordnet ist, bestimmt und die mögliche Kollision wird anhand der bestimmten Entfernung erkannt, wobei die Entfernung zu demjenigen Punkt des Objektbereichs bestimmt, welcher von dem Fahrschlauch am weitesten entfernt ist.

Vorliegend soll bestimmt werden, ob eine Kollision zwischen dem Kraftfahrzeug und einem Objekt bzw. Hindernis, welches sich in einem Umgebungsbereich des Kraftfahrzeugs befindet, droht. Hierzu wird der Fahrschlauch bestimmt, welcher den Bereich in dem Umgebungsbereich beschreibt, den das Kraftfahrzeug bei einer zukünftigen Bewegung einnehmen wird. Der Fahrschlauch beschreibt insbesondere den Bereich, der von dem Kraftfahrzeug zu befahren ist. Zum Bestimmen des Fahrschlauchs kann beispielsweise die aktuelle Geschwindigkeit und/oder die aktuelle Beschleunigung und/oder der aktuelle Lenkwinkel des Kraftfahrzeugs herangezogen werden. Der Fahrschlauch kann also anhand des aktuellen gemessenen Lenkwinkels ermittelt werden. Der Fahrschlauch kann auch auf Grundlage eines Lenkwinkelprofils bestimmt werden. Das Lenkwinkelprofil ist bekannt, wenn das Kraftfahrzeug zumindest semi-autonom, beispielsweise während eines Einparkvorgangs, manövriert wird. Da das Kraftfahrzeug hier entlang einer vorbestimmten Bahn oder Fahrtrajektorie bewegt wird, ist bekannt, wie sich der Lenkwinkel des Kraftfahrzeugs ändern wird. Der Fahrschlauch kann auch anhand eines prädizierten Lenkwinkels bestimmt werden. Hierbei kann der zukünftige Lenkwinkel und/oder einer Lenkwinkeländerung anhand der Geschwindigkeit des Kraftfahrzeugs, der Beschleunigung des Kraftfahrzeugs und/oder der relativen Lage des Objekts zu dem Kraftfahrzeug abgeschätzt werden. Es kann also vorhergesagt werden, die sich Fahrer des Kraftfahrzeugs verhalten wird und welches Lenkmanöver er durchführen wird. Somit kann dann die zukünftige Bewegung des Kraftfahrzeugs abgeschätzt werden. Es kann auch vorgesehen sein, dass das Kraftfahrzeug zumindest semi-autonom manövriert wird und der Fahrschlauch, entlang welchem das Kraftfahrzeug manövriert werden soll, vorbestimmt wird. Darüber hinaus werden Sensordaten von zumindest einem Sensor des Kraftfahrzeugs empfangen. Bei dem Sensor kann es sich beispielsweise um einen Ultraschallsensor, einen Radarsensor, einen Lidar-Sensor, einen Laserscanner, eine Kamera oder dergleichen handeln. Es können auch mehrere Sensoren vorgesehen sein, die gegebenenfalls unterschiedlich ausgebildet sind. Diese Sensordaten können von den jeweiligen Sensoren an eine Steuereinrichtung übertragen werden. Diese Steuereinrichtung kann beispielsweise durch ein elektronisches Steuergerät (ECU - Electronic Control Unit) des Kraftfahrzeugs gebildet sein.

Mittels der Steuereinrichtung kann dann ein Objektbereich für das Objekt bestimmt werden, welcher die Position des Objekts beschreibt. Da das Objekt anhand der Sensordaten mit einer vorbestimmten Messungenauigkeit bestimmt wird, wird die Position und damit der Objektbereich mit einer räumlichen Unsicherheit vorgegeben. Dies bedeutet insbesondere, dass die Position und/oder die räumlichen Abmessungen des Objekts nicht als definierter Punkt vorgegeben werden, sondern der Objektbereich eine bestimmte Fläche in dem Umgebungsbereich beschreibt, in dem sich das Objekt befinden kann. Um nun zu überprüfen, ob eine mögliche Kollision zwischen dem Kraftfahrzeug und dem Objekt droht, wird überprüft, ob der Objektbereich teilweise innerhalb des Fahrschlauchs angeordnet ist. In diesem Fall kann sich das Objekt innerhalb des Fahrschlauchs befinden. Wenn das Kraftfahrzeug entlang des Fahrschlauchs manövriert wird, kann also eine Kollision zwischen dem Kraftfahrzeug und dem Objekt drohen.

Erfindungsgemäß ist es nun vorgesehen, dass eine Entfernung zwischen dem Fahrschlauch und einem Punkt des Objektbereichs bestimmt wird, welcher außerhalb des Fahrschlauchs angeordnet ist. Darüber hinaus wird die mögliche Kollision anhand der bestimmten Entfernung erkannt. Auf Grundlage der Entfernung kann die räumliche Erstreckung des Objektbereichs bestimmt werden. Damit kann bestimmt werden, mit welcher räumlichen Unsicherheit das Objekt erkannt bzw. bestimmt wurde. Ferner kann ermittelt werden, wie weit sich der Objektbereich außerhalb des Fahrschlauchs erstreckt. Anhand der Entfernung kann insbesondere ein Indikator für die Standardabweichung bestimmt werden, mittels welcher die Position des Objekts bestimmt wurde. Wenn die Entfernung beispielsweise verhältnismäßig gering ist, kann mit einer hohen Wahrscheinlichkeit davon ausgegangen werden, dass sich das Objekt innerhalb des Fahrschlauchs befindet. Ist die Entfernung allerdings verhältnismäßig groß, kann davon ausgegangen werden, dass sich das Objekt außerhalb des Fahrschlauchs befindet. Somit kann auf zuverlässige Weise bestimmt werden, ob eine Kollision mit dem Objekt droht oder nicht.

Dabei wird die Entfernung zu demjenigen Punkt des Objektbereichs bestimmt, welcher von dem Fahrschlauch am weitesten entfernt ist. Wie bereits erläutert ist es insbesondere vorgesehen, dass derjenige Punkt des Objektbereichs ausgewählt wird, der auf der Linie angeordnet ist, die senkrecht zu der Begrenzungslinie des Fahrschlauchs verläuft. Insbesondere wird ein Punkt ausgewählt, der auf einem äußeren Rand des Objektbereichs angeordnet ist. Ausgehend von der Begrenzungslinie des Fahrschlauchs können mehrere Linien definiert werden, die senkrecht auf der Begrenzungslinie stehen. Diese Linien weisen dann jeweils Schnittpunkte mit unterschiedlichen Punkten des äußeren Rands des Objektbereichs auf. Dabei wird derjenige Punkt ausgewählt, der die größte Entfernung zu der Begrenzungslinie aufweist. Damit kann die maximale räumliche Erstreckung des Objektsbereichs und somit die räumliche Unsicherheit bei der Objekterkennung bestimmt werden.

Bevorzugt weist der Fahrschlauch zwei Begrenzungslinien auf, welche den Fahrschlauch begrenzen, und die Entfernung wird entlang einer Linie bestimmt, welche durch den Punkt verläuft und senkrecht zu einer der Begrenzungslinien angeordnet ist. Somit kann insbesondere bestimmt werden, mit welcher räumlichen Unsicherheit das Objekt in einer Richtung senkrecht zu dem Fahrschlauch ermittelt wurde. Damit kann beispielsweise bestimmt werden, ob es sich bei dem Objekt um ein bewegliches Objekt handelt, das sich in Richtung des Fahrschlauchs bewegt. Somit kann auf zuverlässige Weise die mögliche Kollision zwischen dem Kraftfahrzeug und dem Objekt vorhergesagt werden.
In einer weiteren Ausführungsform wird eine Kollisionswahrscheinlichkeit, welche eine Wahrscheinlichkeit der möglichen Kollision beschreibt, in Abhängigkeit von der bestimmten Entfernung bestimmt. Wenn die Entfernung beispielsweise verhältnismäßig gering ist, kann von einer hohen Kollisionswahrscheinlichkeit ausgegangen werden. Im Gegensatz dazu kann von einer geringen Kollisionswahrscheinlichkeit ausgegangen werden, wenn die Entfernung verhältnismäßig groß ist. Beispielsweise kann ein Schwellenwert vorgegeben werden, mit dem die Entfernung verglichen wird. Falls die bestimmte Entfernung den vorbestimmten Schwellenwert unterschreitet, kann davon ausgegangen werden, dass die Kollision eintritt. Falls die bestimmte Entfernung den Schwellenwert überschreitet, kann davon ausgegangen werden, dass keine Kollision zwischen dem Kraftfahrzeug und dem Objekt erfolgt. Dieser Schwellenwert kann beispielsweise in der Steuereinrichtung hinterlegt sein. Es kann auch vorgesehen sein, dass dieser Schwellenwert veränderbar ist. Durch den Vergleich der bestimmten Entfernung mit dem Schwellenwert kann von der Steuereinrichtung ein entsprechendes Signal ausgegeben werden, welche beschreibt, ob eine Kollision droht oder nicht. Dieses Signal kann den weiteren Komponenten des Fahrerassistenzsystems bereitgestellt werden.

Weiterhin ist es vorteilhaft, wenn ein Anteil des Objektbereichs bestimmt wird, welcher innerhalb des Fahrschlauchs angeordnet ist, und die Kollision zusätzlich anhand des bestimmten Anteils erkannt wird. Zusätzlich zur Bestimmung der Entfernung kann es vorgesehen sein, dass ermittelt wird, welcher Anteil des Objektbereichs innerhalb des Fahrschlauchs angeordnet ist. Hierbei kann bestimmt werden, welcher Flächenanteil des Objektbereichs innerhalb des Fahrschlauchs angeordnet ist. Wenn beispielsweise ein verhältnismäßig großer Anteil des Objektbereichs innerhalb des Fahrschlauchs angeordnet ist, kann mit einer hohen Wahrscheinlichkeit davon ausgegangen werden, dass eine Kollision droht. Auch hier kann es vorgesehen sein, dass der bestimmte Anteil des Objektbereichs, der innerhalb des Fahrschlauchs angeordnet ist, mit einem Grenzwert verglichen wird. Falls dieser Grenzwert überschritten wird, kann davon ausgegangen werden, dass die Kollision droht. Somit kann die mögliche Kollision zwischen dem Kraftfahrzeug und dem Objekt zuverlässig abgeschätzt werden.

Weiterhin ist es vorteilhaft, wenn der Fahrschlauch und der Objektbereich in eine digitale Umgebungskarte eingetragen werden, welche einen Umgebungsbereich des Kraftfahrzeugs beschreibt, wobei der Objektbereich die Form eines Rechtecks, eines Kreises oder einer Ellipse aufweist. Die digitale Umgebungskarte kann den Umgebungsbereich des Kraftfahrzeugs abbilden. In der digitalen Umgebungskarte können die jeweiligen Objekte mit der räumlichen Unsicherheit, also die Objektbereiche, eingetragen sein. Darüber hinaus kann es vorgesehen sein, dass die Position des Kraftfahrzeugs in die Umgebungskarte eingetragen ist. Ferner kann der bestimmte Fahrschlauch in die Umgebungskarte eingetragen sein. Je nach Ausgestaltung des Sensors und dem Modell, mit dem die räumliche Unsicherheit bestimmt wird, kann der Objektbereich entweder als Rechteck, als Kreis oder als Ellipse dargestellt werden. Innerhalb der Umgebungskarte kann auf einfache Weise bestimmt werden, ob der Objektbereich oder einer der Objektbereiche innerhalb des Fahrschlauchs angeordnet ist. Innerhalb der Umgebungskarte können die jeweiligen Positionen der Objekte in Bezug auf ein Kraftfahrzeugkoordinatensystem, das beispielsweise einem Mittelpunkt einer Hinterachse des Kraftfahrzeugs zugeordnet ist, bezogen werden. Damit wird es auf einfache Weise ermöglicht, die Entfernung zwischen der Begrenzungslinie des Fahrschlauchs und dem Punkt des Objektbereichs zu bestimmen, der am weitesten entfernt von der Begrenzungslinie angeordnet ist.

Eine erfindungsgemäße Steuereinrichtung für ein Fahrerassistenzsystem eines Kraftfahrzeugs ist zum Durchführen eines erfindungsgemäßen Verfahrens ausgelegt. Die Steuereinrichtung kann beispielsweise einen Mikroprozessor, einen digitalen Signalprozessor oder eine Recheneinrichtung aufweisen. Bei der Steuereinrichtung kann es sich insbesondere um ein elektronisches Steuergerät des Kraftfahrzeugs handeln.

Ein erfindungsgemäßes Fahrerassistenzsystem für ein Kraftfahrzeug umfasst zumindest einen Sensor und eine erfindungsgemäße Steuereinrichtung. Bei dem Sensor kann es sich beispielsweise um einen Ultraschallsensor, einen Radarsensor, einen Lidar-Sensor, einen Laserscanner oder dergleichen handeln. Das Fahrerassistenzsystem kann auch mehrere Sensoren umfassen, die beispielsweise verteilt an dem Kraftfahrzeug angeordnet sind. Die Sensoren können zur Datenübertragung mit der Steuereinrichtung, beispielsweise über einen Fahrzeugdatenbus, verbunden sein. Zudem kann das Fahrerassistenzsystem eine Ausgabeeinrichtung aufweisen, mittels welcher eine optische, eine akustische und/oder eine haptische Rückmeldung ausgegeben werden kann, falls eine Kollision zwischen dem Kraftfahrzeug und dem Objekt droht.

Bevorzugt ist das Fahrerassistenzsystem dazu ausgelegt, das Kraftfahrzeug in Abhängigkeit von der bestimmten Entfernung zu manövrieren. Insbesondere ist es vorgesehen, dass das Fahrerassistenzsystem dazu ausgelegt ist, einen Eingriff in eine Bremsanlage und/oder eine Lenkung des Kraftfahrzeugs durchzuführen, falls die bestimmte Entfernung einen vorbestimmten Schwellenwert unterschreitet. Wie bereits erläutert, kann das Fahrerassistenzsystem beispielsweise autonom in die Lenkung und/oder die Bremsanlage des Kraftfahrzeugs eingreifen, falls die Kollision mit dem Objekt droht. Hierzu kann beispielsweise von der Steuereinrichtung ein entsprechendes Steuersignal ausgegeben werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung wie in den Ansprüchen definiert zu verlassen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einer Steuereinrichtung und einer Mehrzahl von Sensoren umfasst;
- Fig. 2: eine schematische Darstellung des Kraftfahrzeugs, welche innerhalb eines Fahrschlauchs bewegt wird, und einen Objektbereich, der die Position eines Objekts beschreibt, wobei der Objektbereich ellipsenförmig ausgebildet ist;
- Fig. 3: das Kraftfahrzeug gemäß Fig. 2, wobei der Objektbereich rechteckförmig ausgebildet ist;
- Fig. 4: das Kraftfahrzeug, welches in einem weiteren Fahrschlauch bewegt wird; und
- Fig. 5: das Kraftfahrzeug, welches in einem weiteren Fahrschlauch bewegt wird.

In den Figuren werden gleiche und funktionsgleiche Elemente mit den gleichen Bezugszeichen versehen.

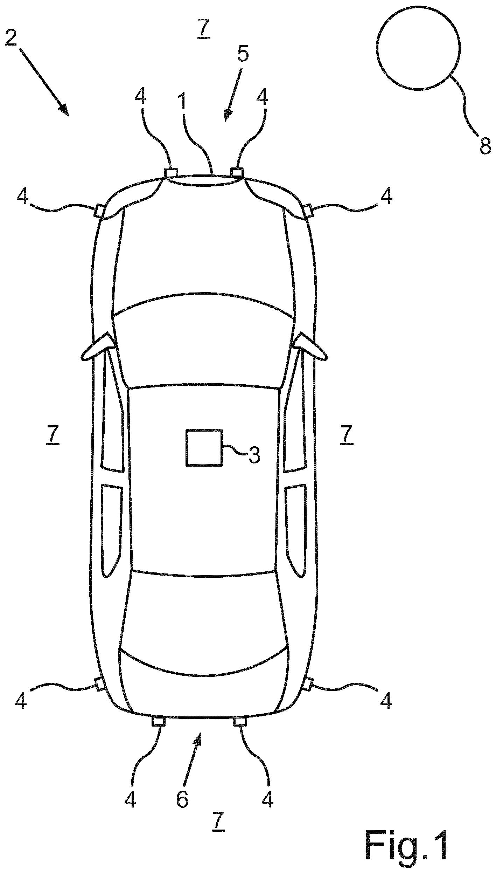

Fig. 1 zeigt ein Kraftfahrzeug 1 gemäß einer Ausführungsform der vorliegenden Erfindung einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein elektronisches Steuergerät des

Kraftfahrzeugs 1 gebildet sein kann. Darüber hinaus umfasst das Fahrerassistenzsystem 2 zumindest einen Sensor 4.

Vorliegend umfasst das Fahrerassistenzsystem 2 acht Sensoren 4, die jeweils als Ultraschallsensoren ausgebildet sind. Dabei sind vier Sensoren 4 in einem Frontbereich 5 des Kraftfahrzeugs 1 angeordnet und vier Sensoren 4 sind in einem Heckbereich 6 des Kraftfahrzeugs 1 angeordnet. Mit Hilfe der Sensoren 4 kann ein Objekt 8 in einem Umgebungsbereich 7 des Kraftfahrzeugs 1 erfasst werden. Hierzu kann mit den Sensoren 4 bzw. den Ultraschallsensoren ein Ultraschallsignal ausgesendet werden, welches wiederum von dem Objekt 8 reflektiert wird und zu den Sensoren 4 zurückgelangt. Anhand der Laufzeit zwischen dem Aussenden des Ultraschallsignals und dem Empfangen des reflektierten Ultraschallsignals kann dann der Abstand zwischen dem Kraftfahrzeug 1 und dem Objekt 8 bestimmt werden.

Mittels der Steuereinrichtung 3 können die Sensordaten von den Sensoren 4 empfangen werden. Dazu können die Sensordaten beispielsweise über einen hier nicht dargestellten Fahrzeugdatenbus von den Sensoren 4 an die Steuereinrichtung 3 übertragen werden. Anhand der Sensordaten kann mittels der Steuereinrichtung eine Position des Objekts 8 bestimmt werden. Ferner kann die Position des Objekts 8 in eine digitale Umgebungskarte eingetragen werden. In der digitalen Umgebungskarte kann die Position des Objekts 8 als Objektbereich 9 dargestellt werden. Dieser Objektbereich weist eine bestimmte räumliche Erstreckung auf, welche die räumliche Unsicherheit bei der Bestimmung der Position des Objekts 8 beschreibt. Ferner kann in der Umgebungskarte ein Fahrschlauch 10 bestimmt werden, der den Bereich in dem Umgebungsbereich 7 beschreibt, in dem das Kraftfahrzeug 1 zukünftig bewegt wird. Der Verlauf des Fahrschlauchs 10 kann beispielsweise anhand der aktuellen Geschwindigkeit und/oder des aktuellen Lenkwinkels des Kraftfahrzeugs 1 mittels der Steuereinrichtung 3 bestimmt werden.

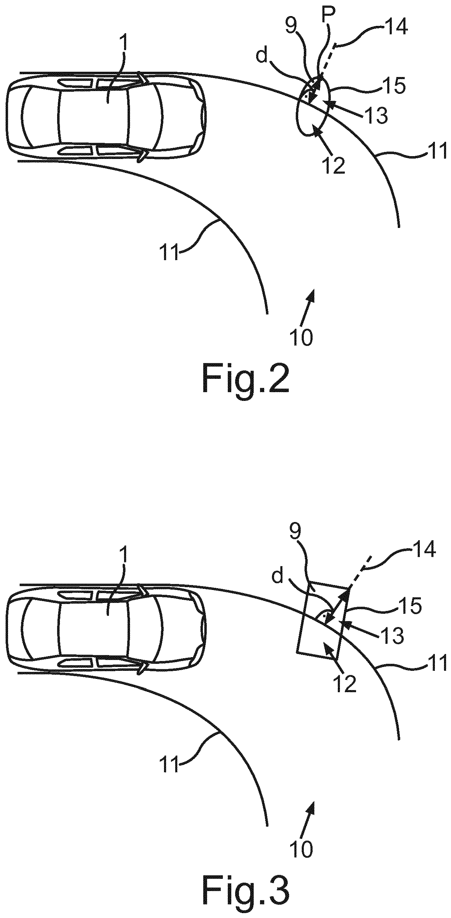

Fig. 2 zeigt eine schematische Darstellung des Kraftfahrzeugs 1, welches innerhalb eines Fahrschlauchs 10 bewegt wird. Vorliegend wird das Kraftfahrzeug 1 innerhalb des Fahrschlauchs 10 entlang einer Rechtskurve bewegt. Der Fahrschlauch 10 weist zwei Begrenzungslinien 11 auf, welche den Fahrschlauch 10 begrenzen. Der Objektbereich 9, der die Position des Objekts 8 inklusive der räumlichen Unsicherheit beschreibt, ist vorliegend als Ellipse dargstellte. Die geometrische Ausgestaltung des Objektbereichs 9 kann abhängig von dem Typ des Sensors 4 und/oder der Methode zur Bestimmung der räumlichen Unsicherheit bestimmt werden. Vorliegend befindet sich ein erster Anteil 12 des Objektbereichs 9 innerhalb des Fahrschlauchs 10 und ein zweiter Anteil 13 des Objektbereichs 9 befindet sich außerhalb des Fahrschlauchs 10.

Um eine mögliche Kollision zwischen dem Kraftfahrzeug 1 und dem Objekt 8 abzuschätzen, wird eine Entfernung d bzw. ein Abstand zwischen derjenigen Begrenzungslinie 11, die dem Objektbereich 9 zugeordnet ist und einem Punkt P bestimmt. Der Punkt P befindet sich dabei außerhalb des Fahrschlauchs 10. Zum Bestimmen der Entfernung d wird eine Linie 14 bestimmt, welche senkrecht auf der Begrenzungslinie 11 steht. Der Punkt P ist auf einem äußeren Rand 15 des Objektbereichs 9 angeordnet. Dabei ist der Punkt P derjenige Punkt des äußeren Randes 15, der die größte Entfernung zu der Begrenzungslinie 11 aufweist.

Anhand der Entfernung d kann die räumliche Unsicherheit, mittels welcher das Objekt 8 bestimmt wurde, senkrecht zu dem Fahrschlauch 10 bestimmt werden. Die Entfernung d ist ein Maß für die Standardabweichung, mit der die Position des Objekts 8 bestimmt wurde. Wenn die Entfernung d relativ gering ist, kann beispielsweise davon ausgegangen werden, dass sich das Objekt 8 mit einer hohen Wahrscheinlichkeit innerhalb des Fahrschlauchs 10 befindet. Hierzu kann beispielsweise die Entfernung d mit einem vorbestimmten Schwellenwert verglichen werden. Falls die Entfernung d den vorbestimmten Schwellenwert unterschreitet, kann davon ausgegangen werden, dass eine Kollision zwischen dem Kraftfahrzeug 1 und dem Objekt 8 droht. Ferner kann es vorgesehen sein, dass der Anteil 12 des Objektbereichs 9 bestimmt wird, der innerhalb des Fahrschlauchs 10 angeordnet ist. Auch dieser Anteil 12 kann mit einem vorbestimmten Grenzwert verglichen werden. Ist dieser Anteil 12 beispielsweise verhältnismäßig groß, kann davon ausgegangen werden, dass das Objekt 8 mit einer hohen Wahrscheinlichkeit innerhalb des Fahrschlauchs 10 angeordnet ist und somit eine Kollision droht.

Fig. 3 zeigt das Kraftfahrzeug 1 gemäß Fig. 2 das entlang des gleichen Fahrschlauchs 10 bewegt wird. Hierbei ist der Objektbereich 9 rechteckförmig ausgebildet. Auch hier können - wie im Zusammenhang mit Fig. 2 erläutert - die Entfernung d und gegebenenfalls der Anteil 12 bestimmt werden, um die Kollision zwischen dem Kraftfahrzeug 1 und dem Objekt 8 abzuschätzen.

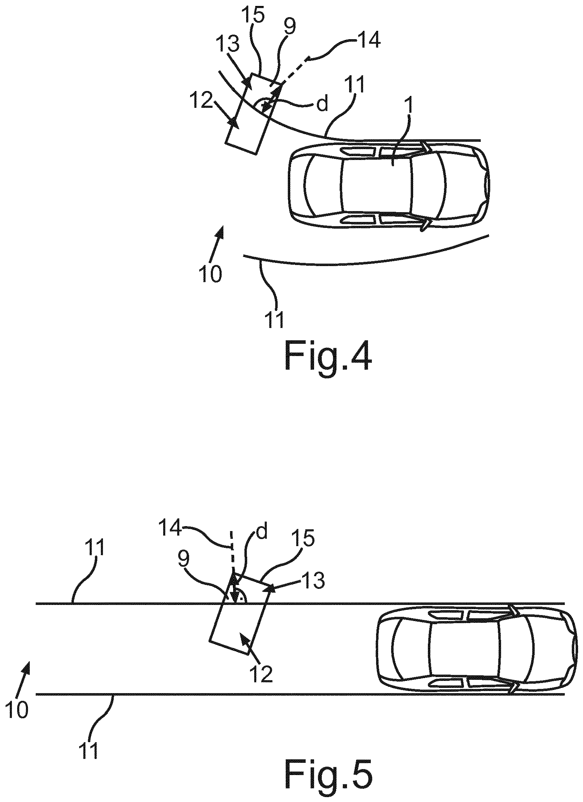

Fig. 4 zeigt das Kraftfahrzeug 1, welches entlang eines Fahrschlauchs rückwärts entlang einer Kurve bewegt wird. Hierbei ist die Entfernung d verhältnismäßig groß. Zudem liegt der Anteil12 des Objektbereichs 9, der innerhalb des Fahrschlauchs 10 angeordnet ist, etwa bei 50 %. In diesem Fall könnte eine Kollision zwischen dem Kraftfahrzeug 1 und dem Objekt 8 drohen.

Fig. 5 zeigt das Kraftfahrzeug 1, welches entlang eines Fahrschlauchs 10 gerade in Rückwärtsrichtung bewegt wird. Hierbei ist die Entfernung d verhältnismäßig klein. Zudem ist der Anteil 12 des Objektbereichs 9, der innerhalb des Fahrschlauchs 10 angeordnet ist, verhältnismäßig groß bzw. beträgt über 50 %. In diesem Fall kann davon ausgegangen werden, dass sich das Objekt 8 innerhalb des Fahrschlauchs 10 befindet und somit eine Kollision zwischen dem Kraftfahrzeug 1 und dem Objekt 8 droht.

Falls anhand der Entfernung d und gegebenenfalls anhand des Anteils 12 erkannt wird, dass die Kollision zwischen dem Kraftfahrzeug 1 und dem Objekt 8 droht, kann mittels der Steuereinrichtung 3 ein entsprechendes Steuersignal ausgegeben werden. In Abhängigkeit von dem Steuersignal kann dann eine Bremsanlage und/oder eine Lenkung des Kraftfahrzeugs 1 angesteuert werden. Beispielsweise kann das Kraftfahrzeug 1 während der Fahrt entlang des Fahrschlauchs 10 abgebremst werden, so dass die Kollision zwischen dem Kraftfahrzeug 1 und dem Objekt 8 unterbleibt. Alternativ oder zusätzlich kann die Lenkung des Kraftfahrzeugs 1 so angesteuert werden, dass das Kraftfahrzeug 1 entlang eines geänderten Fahrschlauchs manövriert wird und dadurch dem Objekt 8 ausweicht. Somit kann insgesamt auf zuverlässige Weise verhindert werden, dass eine Kollision zwischen dem Kraftfahrzeug 1 und dem Objekt 8 eintritt.

## Patentansprüche

1. Verfahren zum Erkennen einer möglichen Kollision zwischen einem Kraftfahrzeug (1) und einem Objekt (8), bei welchem ein Fahrschlauch (10) bestimmt wird, wobei der Fahrschlauch (10) einen Bereich beschreibt, in dem das Kraftfahrzeug (1) bei einer zukünftigen Bewegung bewegt wird, Sensordaten von einem Sensor (4) empfangen werden, welche das Objekt (8) beschreiben, anhand der empfangenen Sensordaten ein Objektbereich (9) bestimmt wird, welcher eine Position des Objekts (8) einschließlich einer räumlichen Unsicherheit beschreibt, und falls der Objektbereich (9) teilweise innerhalb des Fahrschlauchs (10) angeordnet ist, die mögliche Kollision anhand einer relativen Lage des Fahrschlauchs (10) zu dem Objektbereich (9) erkannt wird,
wobei eine Entfernung (d) zwischen dem Fahrschlauch (10) und einem Punkt (P) des Objektbereichs (9), welcher außerhalb des Fahrschlauchs (10) angeordnet ist, bestimmt wird und die mögliche Kollision anhand der bestimmten Entfernung (d) erkannt wird,
**dadurch gekennzeichnet, dass**
die Entfernung (d) zu demjenigen Punkt (P) des Objektbereichs (9) bestimmt wird, welcher von dem Fahrschlauch (10) am weitesten entfernt angeordnet ist.

2. Verfahren nach Anspruch 1,
**dadurch gekennzeichnet, dass**
der Fahrschlauch (10) zwei Begrenzungslinien (11) aufweist, welche den Fahrschlauch begrenzen, und die Entfernung entlang einer Linie (14) bestimmt wird, welche durch den Punkt (P) verläuft und senkrecht auf einer der Begrenzungslinien (11) angeordnet ist.

3. Verfahren nach einem der vorhergehenden Ansprüche,
**dadurch gekennzeichnet, dass**
eine Kollisionswahrscheinlichkeit, welche eine Wahrscheinlichkeit der möglichen Kollision beschreibt, in Abhängigkeit von der bestimmten Entfernung (d) bestimmt wird.

4. Verfahren nach einem der vorhergehenden Ansprüche,
**dadurch gekennzeichnet, dass**
ein Anteil (12) des Objektbereichs (9) bestimmt, welcher innerhalb des Fahrschlauchs (10) angeordnet ist, und die Kollision zusätzlich anhand des bestimmten Anteils (12) erkannt wird.

5. Verfahren nach einem der vorhergehenden Ansprüche,
**dadurch gekennzeichnet, dass**
der Fahrschlauch (10) und der Objektbereich (9) in eine digitale Umgebungskarte eingetragen werden, welche einen Umgebungsbereich (7) des Kraftfahrzeugs (1) beschreibt, wobei der Objektbereich (9) eine Form eines Rechtecks, eines Kreises oder einer Ellipse aufweist.

6. Steuereinrichtung (3) für ein Fahrerassistenzsystem (2) eines Kraftfahrzeugs (1), welche zum Durchführen eines Verfahrens nach einem der vorhergehenden Ansprüche ausgelegt ist.

7. Fahrerassistenzsystem (2) für ein Kraftfahrzeug (1) mit zumindest einem Sensor (4) und mit einer Steuereinrichtung (3) nach Anspruch 6.

8. Fahrerassistenzsystem (2) nach Anspruch 7,
**dadurch gekennzeichnet, dass**
das Fahrerassistenzsystem (2) dazu ausgelegt ist, das Kraftfahrzeug (1) in Abhängigkeit von der bestimmten Entfernung (d) zu manövrieren.

9. Fahrerassistenzsystem (2) nach Anspruch 7 oder 8,
**dadurch gekennzeichnet, dass**
das Fahrerassistenzsystem (2) dazu ausgelegt ist, einen Eingriff in eine Bremsanlage und/oder eine Lenkung des Kraftfahrzeugs (1) durchzuführen, falls die bestimmte Entfernung (d) einen vorbestimmten Schwellenwert unterschreitet.

10. Kraftfahrzeug (1) mit einem Fahrerassistenzsystem (2) nach einem der Ansprüche 7 bis 9.

## Claims

1. Method for detecting a possible collision between a motor vehicle (1) and an object (8), in which a driving tube (10) is determined, wherein the driving tube (10) describes an area in which the motor vehicle (1) will be moved during a future movement, sensor data, which describe the object (8), are received from a sensor (4), an on the basis of the received sensor data and object area (9) is determined which describes a position of the object (8) including a spatial uncertainty level, and if the object area (9) is arranged partially within the driving tube (10) the possible collision is detected on the basis of a relative position of the driving tube (10) with respect to the object area (9), wherein a distance (d) between the driving tube (10) and a point (P) of the object area (9) which is arranged outside the driving tube (10) is determined and the possible collision is detected on the basis of the determined distance (d),
**characterized in that**
the distance (d) from that point (P) of the object area (9) which is arranged furthest away from the driving tube (10) is determined.

2. Method according to Claim 1,
**characterized in that**
the driving tube (10) has two boundary lines (11) which bound the driving tube, and the distance is determined along a line (14) which runs through the point (P) and is arranged perpendicularly on one of the boundary lines (11).

3. Method according to one of the preceding claims,
**characterized in that**
a probability of collision which describes a probability of the possible collision is determined as a function of the determined distance (d).

4. Method according to one of the preceding claims,
**characterized in that**
a proportion (12) of the object area (9) which is arranged within the driving tube (10) is determined, and the collision is additionally detected on the basis of the determined proportion (12).

5. Method according to one of the preceding claims,
**characterized in that**
the driving tube (10) and the object area (9) are entered into a digital map of the surroundings which describes an area of the surroundings (7) of the motor vehicle (1), wherein the object area (9) is in the form of a rectangle, of a circle or of an ellipse.

6. Control device (3) for a driver assistance system (2) of a motor vehicle (1), which control device (3) is configured to carry out a method according to one of the preceding claims.

7. Driver assistance system (2) for a motor vehicle (1) having at least one sensor (4) and having a control device (3) according to Claim 6.

8. Driver assistance system (2) according to Claim 7,
**characterized in that**
the driver assistance system (2) is configured to manoeuvre the motor vehicle (1) as a function of the determined distance (d).

9. Driver assistance system (2) according to Claim 7 or 8,
**characterized in that**
the driver assistance system (2) is configured to make an intervention into a brake system and/or a steering system of the motor vehicle (1) if the determined distance (d) undershoots a predetermined threshold value.

10. Motor vehicle (1) having a driver assistance system (2) according to one of Claims 7 to 9.

## Revendications

1. Procédé de détection d'une collision possible entre un véhicule automobile (1) et un objet (8), dans lequel un couloir de circulation (10) est déterminé, dans lequel le couloir de circulation (10) définit une région dans laquelle le véhicule automobile (1) est déplacé lors d'un mouvement ultérieur, des données de capteur sont reçues en provenance d'un capteur (4), lesquelles décrivent l'objet (8), une région d'objet (9) est déterminée sur la base des données de capteur reçues, laquelle définit une position de l'objet (8), y compris une incertitude spatiale, et dans le cas où la région d'objet (9) est disposée partiellement à l'intérieur du couloir de circulation (10), la collision possible est détectée sur la base d'une position relative du couloir de circulation (10) par rapport à la région d'objet (9), dans lequel une distance (d) entre le couloir de circulation (10) et un point (P) de la région d'objet (9) qui est disposé à l'extérieur du couloir de circulation (10) est déterminée et la collision possible est détectée sur la base de la distance (d) déterminée,
**caractérisé en ce que** la distance (d) du point (P) de la région d'objet (9) qui est le plus éloigné du couloir de circulation (10) est déterminée.

2. Procédé selon la revendication 1,
**caractérisé en ce que** le couloir de circulation (10) comporte deux lignes de délimitation (11) qui délimitent le couloir de circulation et la distance est déterminée le long d'une droite (14) passant par le point (P) et disposée perpendiculairement à l'une des lignes de délimitation (11).

3. Procédé selon l'une des revendications précédentes,
**caractérisé en ce qu'**une probabilité de collision, qui définit une probabilité de collision possible, est déterminée en fonction de la distance (d) déterminée.

4. Procédé selon l'une des revendications précédentes,
**caractérisé en ce qu'**une fraction (12) de la région d'objet (9) qui est disposée à l'intérieur du couloir de circulation (10) est déterminée et la collision est en outre détectée sur la base de ladite fraction déterminée (12) .

5. Procédé selon l'une des revendications précédentes,
**caractérisé en ce que** le couloir de circulation (10) et la région d'objet (9) sont introduits dans une carte numérique d'une région environnante qui définit une région environnante (7) du véhicule automobile (1), dans lequel la région d'objet (9) présente la forme d'un rectangle, d'un cercle ou d'une ellipse.

6. Dispositif de commande (3) d'un système d'aide à la conduite (2) d'un véhicule automobile (1), qui est conçu pour mettre en oeuvre un procédé selon l'une des revendications précédentes.

7. Système d'aide à la conduite (2) pour un véhicule automobile (1), comportant au moins un capteur (4) et un dispositif de commande (3) selon la revendication 6.

8. Système d'aide à la conduite (2) selon la revendication 7,
**caractérisé en ce que** le système d'aide à la conduite (2) est conçu pour manoeuvrer le véhicule automobile (1) en fonction de la distance (d) déterminée.

9. Système d'aide à la conduite (2) selon la revendication 7 ou 8,
**caractérisé en ce que** le système d'aide à la conduite (2) est conçu pour effectuer une intervention dans un système de freinage et/ou une direction du véhicule automobile (1) dans le cas où la distance (d) déterminée passe end dessous d'une valeur de seuil prédéterminée.

10. Véhicule automobile (1) comportant un système d'aide à la conduite (2) selon l'une des revendications 7 à 9.
